# NEW EUROPEAN PATENT SPECIFICATION

(11) **EP 3 186 052 B2**
(45) Date of publication and mention of the opposition decision: **23.02.2022**
(45) Mention of the grant of the patent: 02.05.2018
(21) Application number: 15805443.7
(22) Date of filing: 03.12.2015
(51) Int. Cl.: B29B 7/60, B29B 7/72, B29C 47/10, B29B 9/06, C08J 3/20, G05D 11/13, B29B 7/38, B29C 47/00, B29C 47/92

(54) **PROCESS FOR PREPARING POLYOLEFIN PELLETS OF A POLYOLEFIN COMPOSITION**
VERFAHREN ZUR HERSTELLUNG VON POLYOLEFINPELLETS EINER POLYOLEFINZUSAMMENSETZUNG
PROCÉDÉ DE PRÉPARATION DES GRANULÉS DE POLYOLEFINE D'UNE COMPOSITION DE POLYOLÉFINE

(30) Priority: 04.12.2014 EP 14196371
(43) Date of publication of application: 05.07.2017
(73) Proprietor: Basell Polyolefine GmbH, 50389 Wesseling (DE)
(72) Inventor: KRUEMPEL, Peter, 65520 Bad Camberg (DE); PRANG, Harald, 50374 Erftstadt (DE); KUEHL, Reinhard, 53332 Bornheim (DE); DAMM, Elke, 61118 Bad Vilbel (DE)
(74) Representative: LyondellBasell
(86) International application number: PCT/EP2015/078470
(87) International publication number: WO 2016/087564

(56) References cited:
- EP-A1- 2 016 995
- EP-A1- 2 030 757
- EP-A2- 0 238 796
- WO-A1-2011/058861
- WO-A2-2009/059967
- US-A- 4 448 736
- US-A- 4 510 271
- US-B1- 6 492 485

## Description

### FIELD OF THE INVENTION

The present disclosure provides a process for continuously preparing a polyolefin composition comprising polyolefin, carbon black, and optionally one or more further additives. The present disclosure especially provides a process for continuously preparing a polyolefin composition comprising polyolefin, carbon black, and optionally one or more further additives, in which the polyolefin is a bimodal or multimodal high density polyethylene.

### BACKGROUND OF THE INVENTION

Polyolefins are the most widely used commercial polymers. To achieve and maintain the desired properties, it is however essential that the polymers are equipped with additional substances. These so-called plastics additives are auxiliary compounds which significantly influence the properties of the polymers and make the polymers commercially useful, although the additives are only added in small quantities. The additives are usually combined with the polyolefins directly after their polymerization during the pelletizing step.

Polyolefins with an outstanding combination of properties are so-called bimodal or multimodal polyolefins. These polymers are frequently prepared in a cascade of two or more polymerization reactors which usually have different polymerization conditions. The individual particles of the polyolefin powder obtained in such polymerization processes may vary strongly in their composition. Accordingly, particular efforts are needed to homogenize these polyethylenes in the pelletizing step. For example, WO 2004/096523 A1 discloses a particular extruder configuration for melting and homogenizing multimodal or bimodal polyolefins.

For the preparation of bimodal or multimodal polyolefins with outstanding properties it is however not only needed that the polymeric components of the polyolefins are extremely well homogenized but it is also required that the plastics additives are very uniformly distributed within the polymer. This uniformity should not only include a very even homogenization throughout the polymeric material but also include that the ratio of plastics additives to polyolefinic material and the ratio between the different additives is substantially identical for all polyolefin pellets. Furthermore, it should be possible to achieve this homogeneous distribution by a reliable and economic method.

Achieving a homogeneous distribution of carbon black in polyolefins is an even higher demanding process. Carbon black is used for UV protection or as pigment for coloring in many polyolefin applications, such as for example in pipe or plastic fuel tank applications. Carbon black is available as fluffy powder or in pelletized form. Nonetheless, carbon black is difficult to handle because it is fragile, tends to blocking of conveying equipment and soils machinery which then requires thereafter serious cleaning. Thus, for preparing polyolefin compositions comprising carbon black, the use of carbon black in form of polyolefin masterbatches is widespread. However, employing the carbon black in form of a masterbatch has the drawback that the carrier polymer of the masterbatch and the base polyolefins of the polyolefin composition should be compatible and thus different base polyolefins can require different masterbatches. Moreover, preparing the polyolefin masterbatch is an extra process step which increases the production costs for the polyolefin composition.

WO 2009/059967 A2 discloses a method for introducing carbon black into a polyolefin in which method polyolefin powder and optional additives are fed to a main extruder and therein combined with a molten or partly molten polyolefin/carbon black composition comprising from 10 to 60 wt.% carbon black which composition has been prepared in a small side extruder of the main extruder. WO 2015/071075 A1 relates to direct feeding of carbon black in the production of black compounds for pipe and wire and cable applications. The described processes comprise either feeding the carbon black pigment directly into the inlet of a melt extruder or feeding a combination of the carbon black pigment and a solid pigment into the inlet of a melt extruder. US 4,448,736 discloses a continuous in-line melt flow rate control system in a process for preparing a degraded polymer, in which the viscosity of a slip stream of melt from the extruder is monitored and the amount of degradent, such as a peroxide, fed to the extruder is adjusted.

There is accordingly a need to overcome the disadvantages of the prior art and to provide a process which allows to achieve a very uniform distribution of carbon black and optionally other additives in polyolefin compositions, especially in polyolefin compositions comprising bimodal or multimodal high density polyethylene, and which process can be carried out economically and reliably with high dosing accuracy and which results in polyolefin compositions which show no or only minor losses in the polymer properties as a consequence of the added carbon black.

### SUMMARY OF THE INVENTION

The present disclosure provides a process for continuously preparing a polyolefin composition comprising polyolefin and carbon black in an extruder device preparing polyolefin pellets of the polyolefin composition, the process comprising the steps
(i) supplying polyolefin in form of a polyolefin powder at a flow rate to a mixing device;
(ii) measuring a flow rate of the polyolefin pellets prepared in the extruder device;
(iii) supplying carbon black to the mixing device;
(iv) optionally supplying one or more further additives to the mixing device;
(v) adjusting the flow rate of the polyolefin powder to the mixing device in response to the measured flow rate of the polyolefin pellets and either keeping the flow rates of the carbon black and the optionally supplied one or more further additives supplied to the mixing device constant or also adjusting the flow rates of the carbon black and the optionally supplied one or more further additives supplied to the mixing device in response to the measured flow rate of the polyolefin pellets;
(vi) mixing the polyolefin powder, the carbon black and the optionally supplied one or more further additives in the mixing device to form a powder mixture,
(vii) transferring the powder mixture obtained in step (vi) from the mixing device into the extruder device;
(viii) heating the powder mixture to form a melt and homogenizing the melt within the extruder device to form a molten polyolefin composition; and
(ix) pelletizing the molten polyolefin composition, thereby yielding the polyolefin pellets.

In some embodiments, the flow rate of the polyolefin pellets is measured by a solids flow meter.

In some embodiments, the mixing device is a paddle mixer comprising two horizontally orientated counter-rotating shafts.

In some embodiments, the carbon black is supplied to the mixing device from a carbon black storage vessel in an at least three step process comprising
(iiia) transferring the carbon black from the storage vessel through a first carbon black discharge valve to a carbon black feeding vessel;
(iiib) subsequently transferring the carbon black from the carbon black feeding vessel through a second carbon black discharge valve by gravity to a dosing device; and
(iiic) subsequently transferring the carbon black from the dosing device to the mixing device.

In some embodiments, the first carbon black discharge valve and the second carbon black discharge valve are pinch valves.

In some embodiments, the carbon black feeding vessel is equipped with an agitator.

In some embodiments, the dosing device is equipped with a dosing device hopper and the dosing device hopper is equipped with an agitator.

In some embodiments, in transferring step (iiia), the carbon black passes a conveying chute after having passed the first carbon black discharge valve.

In some embodiments, transferring step (iiia) is carried out intermittently, the carbon black feeding vessel is situated on a scale and transferring step (iiib) is controlled by measuring differences in the weight of the carbon black feeding vessel.

In some embodiments, the polyolefin is a polyethylene.

In some embodiments, the polyolefin powder is a powder of a bimodal or multimodal polyolefin.

In some embodiments, the polyethylene is a high density polyethylene having a density determined according to ISO 1183 at 23°C from 0.945 to 965 g/cm³.

In some embodiments, the process additionally comprises
(x) supplying polyolefin pellets to the extruder device; and
(xi) adjusting the flow rate of the polymer pellets fed to extruder device in response to the measured flow rate of the polyolefin pellets.

### BRIEF DESCRIPTION OF THE DRAWINGS

The following figure illustrates the subject matter disclosed herein. The claimed subject matter may be understood by reference to the following description taken in conjunction with the accompanying figure, in which like reference numerals identify like elements, and in which:

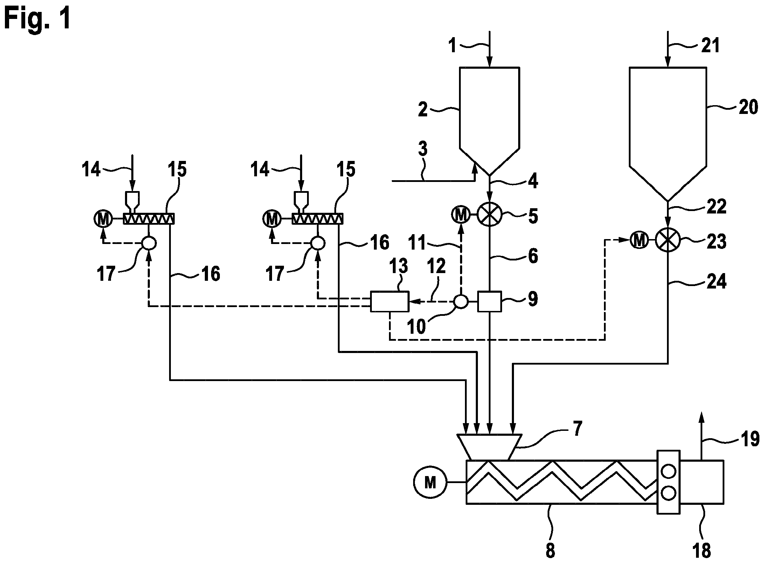

Figure 1 shows schematically a comparative set-up for preparing a polyolefin composition

### DETAILED DESCRIPTION OF THE INVENTION

The present disclosure refers to a process for preparing a polyolefin composition comprising polyolefin, carbon black, and optionally one or more further additives. Suitable polyolefins are obtained by polymerizing olefins and especially by polymerizing 1-olefins, i.e. hydrocarbons having terminal double bonds, without being restricted thereto. Preferred monomers are nonpolar olefinic compounds, including aryl-substituted 1-olefins. Particularly preferred 1-olefins are linear or branched C₂-C₁₂-1-alkenes, in particular linear C₂-C₁₀-1-alkenes such as ethylene, propylene, 1-butene, 1-pentene, 1-hexene, 1-heptene, 1-octene, 1-decene or branched C₂-C₁₀-1-alkenes such as 4-methyl-1-pentene, conjugated and nonconjugated dienes such as 1,3-butadiene, 1,4-hexadiene or 1,7-octadiene or vinylaromatic compounds such as styrene or substituted styrene. It is also possible to polymerize mixtures of various 1-olefins. Suitable olefins also include ones in which the double bond is part of a cyclic structure which can have one or more ring systems. Examples are cyclopentene, norbornene, tetracyclododecene or methylnorbornene or dienes such as 5-ethylidene-2-norbornene, norbornadiene or ethylnorbornadiene. It is also possible to polymerize mixtures of two or more olefins.

The process of the present disclosure is in particular a process for preparing polyolefin compositions comprising polyolefins which were obtained by homopolymerization or copolymerization of ethylene or propylene. As comonomers in propylene polymerization preference is given to using up to 40 wt.% of ethylene and/or 1-butene.

In a preferred embodiment, the process of the present disclosure refers to preparing a polyolefin composition comprising polyolefins obtained by homopolymerizing or copolymerizing ethylene. Particular preference is given to preparing polyolefin compositions comprising polyethylenes in which ethylene is copolymerized with up to 40 wt.% of C₃-C₈-1-alkenes, preferably 1-butene, 1-pentene, 1-hexene, 1-octene, or mixtures thereof. Particular preference is given to a process in which ethylene is copolymerized with up to 20 wt.% of 1-butene, 1-hexene, or mixtures thereof.

All industrially known polymerization methods may be used for preparing the polyolefins. This includes solution processes, suspension processes, and gas-phase processes. The polymerization can be carried out batchwise or preferably continuously in one or more stages. Processes of this type are generally known to those skilled in the art. Among the polymerization processes mentioned, gas-phase polymerization, in particular in gas-phase fluidized-bed reactors or multi-zone circulating gas-phase reactors and suspension polymerization, in particular in loop reactors or stirred tank reactors are preferred.

The process of the present disclosure is employed for preparing polyolefin compositions of all types of common polyolefin polymers. The process of the present disclosure is especially suitable for preparing polyolefin compositions comprising bimodal or multimodal polyolefins whereby the terms bimodal and multimodal refer to the modality of the molecular weight distribution. Such polymers can be obtained from polymerizing olefins in a cascade of two or more polymerization reactors under different reaction conditions. Thus, the "modality" indicates how many different polymerization conditions were utilized to prepare the polyolefin, independently whether this modality of the molecular weight distribution can be recognized as separated maxima in a gel permeation chromatography (GPC) curve or not. Frequently used in the art, and also used herein, the term multimodal can include bimodal. In addition to the molecular weight distribution, the polyolefin polymer can also have a comonomer distribution, wherein preferably the average comonomer content of polymer chains with a higher molecular weight is higher than the average comonomer content of polymer chains with a lower molecular weight. It is however also possible to employ identical or very similar reaction conditions in all polymerization reactors of the reaction cascade and so prepare narrow molecular weight or monomodal polyolefin polymers. A complication in producing multimodal polyolefins in a cascade of polymerization reactors operating at different reaction conditions is however that, caused by different residence times of individual polyolefin particles in the different reactor, the composition of the individual polyolefin particles of a polyolefin powder may vary strongly.

The polymerization can be carried out using all customary olefin polymerization catalysts. That means the polymerization can be carried out, for example, using Phillips catalysts based on chromium oxide, using titanium-based Ziegler- or Ziegler-Natta-catalysts, using single-site catalysts, or using mixtures of such catalysts. The preparation and use of these catalysts for olefin polymerization are generally known.

The polyolefins are usually obtained as powder that means in form of small particles. The particles which have usually a more or less regular morphology and size, depending on the catalyst morphology and size, and on polymerization conditions. Depending on the catalyst used, the particles of the polyolefin powder usually have a mean diameter of from a few hundred to a few thousand micrometers. In the case of chromium catalysts, the mean particle diameter is usually from about 300 to about 1600 µm, and in the case of Ziegler type catalysts the mean particle diameter is usually from about 100 to about 3000 µm. Preferred polyolefin powders have a mean particle diameter of from 150 to 250 µm. The particle size distribution can, for example, advantageously be determined by sieving. Suitable technics are e.g. vibrating sieve analysis or sieve analysis under an air jet.

Preferred polyolefins for preparing the polyolefin compositions of the present disclosure are polyethylenes having an ethylene content of from 50 to 100 wt.%, more preferably from 80 to 100 wt.%, and in particular from 98 to 100 wt.%. Accordingly, the content of other olefins in the polyethylenes is preferably from 0 to 50 wt.%, more preferably from 0 to 20 wt.%, and in particular from 0 to 2 wt.%.

The density of preferred polyethylene compositions obtained by the process of the present disclosure is from 0.90 g/cm³ to 0.97 g/cm³. Preferably the density is in the range of from 0.920 to 0.968 g/cm³ and especially in the range of from 0.945 to 0.965 g/cm³. The density has to be understood as being the density determined according to DIN EN ISO 1183-1:2004, Method A (Immersion) with compression molded plaques of 2 mm thickness which were pressed at 180°C, 20MPa for 8 minutes with subsequent crystallization in boiling water for 30 minutes.

The melt flow rate MFR_{21.6} at 190°C under a load of 21.6 kg of the polyethylene compositions, determined according to DIN EN ISO 1133:2005 condition G, is from 1 g/10 min to 80 g/10 min, preferably from 2 g/10 min to 50 g/10 min and especially from 5 g/10 min to 25 g/10 min.

According to the process of the present disclosure, the polyolefin is combined with carbon black, either as carbon black powder or in form of pelletized carbon black, preferably carbon black powder. The amount of carbon black in the prepared polyolefin composition is preferably from 0.1 to 12 wt.%, more preferably from 0.5 to 5 wt.%, even more preferably from 2 to 3 wt.%, and especially from 2.1 to 2.5 wt.%.

The term carbon black designates a family of finely divided carbon pigments produced by incomplete combustion or thermal decomposition of hydrocarbons which have a high surface-area-to-volume ratio. Examples of carbon black are furnace black or acetylene black. In a preferred embodiment, the carbon black has particle sizes in the range from 5 nm to 500 nm, more preferably from 15 nm to 60 nm and most preferably of not more than 25 nm. Carbon black is employed in the preparation of the polyolefins of the present disclosure inter alia to provide UV resistance and weatherability to thereof produced articles and to ensure performance of certified products such as regulated pressure pipes.

In a preferred embodiment of the present disclosure, the polyolefin is additionally combined with one or more further additives. Such additives are common in the art. Especially for multimodal polyolefins it is however essential that they are very uniformly distributed within the polyolefin. Suitable types of additives for preparing polyolefin compositions are, for example, antioxidants, light stabilizers, acid scavengers, lubricants, processing aids, antiblocking agents, slip agents, antistatics agents, antifogging agents, pigments or dyes, nucleating agents, flame retardants or fillers. It is common that several additives are added to the polyolefin compositions. The multiple additives can be different types of additives. It is however also possible that several representatives of one type of additives are added to one polyolefin composition. Additives of all these types are generally commercially available and are described, for example, in Hans Zweifel, Plastics Additives Handbook, 5th Edition, Munich, 2001.

The process of the present invention is characterized in that as well the polyolefin in form of a polyolefin powder as the carbon black and the optionally supplied one or more additives are supplied to a mixing device and the combined material is then transferred into the extruder device for melting and further mixing. Preferred mixing devices are paddle mixers comprising two horizontally orientated counter-rotating shafts. The shafts are equipped with paddles of an appropriate geometry. The rotating shafts move the composition of polyolefin powder and additives horizontally along the axis of the shafts and at the same time mix them intensively. Such paddle mixers are commercially available, for example, from Köllemann GmbH, Adenau, Germany or J. Engelsmann AG, Ludwigshafen, Germany. The mixture of polyolefin powder and additives exits the mixing device at the end of the shafts and is then transferred, preferably by gravity, to a hopper of the extruder device.

The polyolefin powder is supplied to the mixing device from a storage vessel and in particular from a storage vessel having a conical bottom. In a preferred embodiment the storage vessel for supplying the polyolefin powder is equipped with a discharging aid which keeps the polyolefin powder in free flowing state. A preferred discharging aid is for example the introduction of an inert gas, preferably nitrogen, into the bottom to the storage vessel, more preferably into a conical bottom of the storage vessel. The polyolefin powder is preferably transferred from the storage vessel to the mixing device by gravity.

The carbon black is preferably supplied to the mixing device from a dedicated carbon black storage vessel. The carbon black storage vessel can be charged by bag delivery. Preferably the carbon black storage vessel is charged by bulk delivery from container vehicles such as trucks or railcar with pneumatic conveying of the carbon black to the carbon black storage vessel or by filling from semi-bulk containers such as big bags. To prevent any settlement and compacting of the carbon black stored in the carbon black storage vessel, a gas, preferably dried air or nitrogen, is introduced into the bottom of the carbon black storage vessel, more preferably into a conical bottom of the carbon black storage vessel and most preferable into a conical bottom which is covered by a synthetic cloth. Preferably a combination of two carbon black storage vessels is employed in the process of the present disclosure, allowing that one carbon black storage vessel is in operation for supplying carbon black to the mixing device while the other can be refilled. Preferably each of the carbon black storage vessels has a dimension that it can hold a quantity of carbon black which is sufficient that the process according to the present disclosure can be carried out for about 4 days.

The process for supplying the carbon black from the storage vessel to the mixing device is preferably an at least three step process comprising transferring step (iiia) for transferring the carbon black from the storage vessel through a first carbon black discharge valve to a carbon black feeding vessel; transferring step (iiib) for subsequently transferring the carbon black from the carbon black feeding vessel through a second carbon black discharge valve by gravity to a dosing device; and transferring step (iiic) for subsequently transferring the carbon black from the dosing device to the mixing device.

Preferably the first carbon black discharge valve and the second carbon black discharge valve are pinch valves. These valves have the advantages that the valves lock opens up the full cross-section and that the valves have no metal inside and are self-cleaning due to their flexibility.

The conveying of the carbon black in transferring steps(iiia), (iiib), and (iiic) preferably occurs in downpipes, more preferably in downpipes of flexible consistency, to avoid clogging and allow a fast transport.

In transferring step (iiia), the carbon black passes preferably a conveying chute after having passed the first carbon black discharge valve. The conveying chute is preferably operated by introducing a gas, preferably dried air or nitrogen, into the bottom of the conveying chute, preferably into two or more inlets which are evenly distributed over the length of the conveying chute.

The carbon black feeding vessel has a preferably a smaller volume than the carbon black storage vessel and is utilized to decrease the height difference between the carbon black storage vessel or the more preferably being employed conveying chute and the dosing device to ensure a better and more precise feeding of the carbon black to the mixing device. The carbon black feeding vessel is preferably situated on a scale. The carbon black feeding vessel is further preferably equipped with an agitator, preferably a spiral agitator, which agitator preferably extends to the outlet of the carbon black feeding vessel.

In a preferred embodiment of the present disclosure, in which the carbon black feeding vessel is situated on a scale, transferring step (iiia) is carried out intermittently, and transferring step (iiib) is controlled by measuring differences in the weight of the carbon black feeding vessel. Preferably also transferring step (iiib) occurs intermittently and is carried out at a different point of time than transferring step (iiia).

The dosing device is preferably equipped with a dosing device hopper and the dosing device hopper is preferably equipped with an agitator. The dosing device hopper is preferably further equipped on top with a filter unit which allows compensation for the pressure built up when carrying out transferring step (iiib) by venting gas through the filter to atmosphere. The filter unit preferably comprises a cleaning device to prevent clogging by carbon black.

The optionally supplied additives are preferably supplied from dedicated storage vessels for the additives. It is however also possible to supply the additives directly from transport containers such as big bags. The additives which are utilized for preparing the polyolefin compositions of the present disclosure can be supplied in solid form, preferably in form of small particles, or they can be liquid or they are fed in dissolved form. It is possible to supply all additives individually or it is possible to supply one or more mixtures of additives comprising some of the selected additives or a mixture of all additives is supplied with the polyolefin powder. Preferably all additives are supplied in form of solid particles.

The prepared polyolefin compositions comprise polyolefin, carbon black and optionally one or more additives. The composition of the prepared polyolefin compositions is preferably defined by a recipe which identifies the nature of the employed polyolefin powder, the nature of the employed carbon black, the nature of the optional additives, their number, their quantity and their ratio. The constitution of the prepared polyolefin compositions may differ significantly from prepared polyolefin compositions to prepared polyolefin compositions. However, all polyolefin compositions comprise a majority of polyolefin. Preferably the polyolefin portion of the prepared polyolefin compositions is from 80 to 99.98 wt.%, more preferable from 95 to 99.95 wt.%, and especially from 98 to 99.9 wt.%. The present disclosure not only refers to preparing such polyolefin compositions with a very homogenous distribution of the carbon black and the optional additives within the polyolefin composition but also to producing these compositions accurately with a very constant ratio of the components in an economical and reliable way.

The amount of polyolefin powder supplied to the mixing device is preferably regulated by a suitable feeding device such as a rotary valve or a screwfeeder. By varying the speed of the feeding device, the amount of polyolefin powder supplied to the mixing device can be altered. The speed of the feeding device is preferably controlled by a controller in a way that the fed amount of polyolefin powder corresponds to a preselected set-point corresponding to the desired portion of the polyolefin in the polyolefin composition.

Measuring the flow rate of the polyolefin pellets prepared in the extruder device allows to adjust the flow rate of the polyolefin powder to the mixing device based on the actual amount of polyolefin pellets produced in the extruder device. By using a measurement of the flow rate of the produced polymer pellets for adjusting the flow rate of the polyolefin powder, variations in the speed of the polyolefin powder feeding device are still compensated; however possible difficulties in measuring polymer flow rates of polymer particles having a certain stickiness are substantially reduced. The flow rate of the polyolefin pellets is preferably measured on dried polyolefin pellets, i.e. preferably downstream of the usually employed underwater pelletizer and centrifugal drier. The flow rates of the carbon black and the optionally supplied one or more additives supplied to the mixing device are either kept constant at a pre-determined value and the ratio of carbon black and additives to polyolefin in the polyolefin composition is controlled by only adjusting the flow rate of the polyolefin powder supplied to the mixing device or, preferably, both the flow rate of the polyolefin powder and the flow rates of the carbon black and the optionally supplied one or more additives supplied to the mixing device are adjusted based on the actual amount of polyolefin pellets produced in the extruder device, preferably employing different control characteristics for controlling the flow rates of the carbon black and the optionally supplied one or more additives and for controlling the feed of polyolefin powder.

Preferably, the flow rate of the polyolefin pellets prepared in the extruder device is measured by a solids flow meter. Suitable solids flow meters can use impact plate, measuring chute or Coriolis measuring technologies. Such solids flow meters are commercially available, for example from Schenck Process, Whitewater, WI, USA or Coperion K-Tron, Gelnhausen, Germany. The solids flow meter is preferably equipped with a controller. This controller allows adjusting the speed of the feeding device, which supplies the polyolefin powder to the extruder, based on information regarding the actually supplied amount of polyolefin powder.

The measured flow rate of the polyolefin pellets is used to adjust the flow rates of the carbon black and the optionally supplied one or more additives supplied to the mixing device. For that, the controller of the solid flow meter transmits a signal, which is indicative of the flow rate of the polyolefin powder to the mixing device to a computing unit such as a computer. The computing device continuously calculates set points for the desired flows of additives to the mixing device which set points reflect the amounts of polyolefin powder actually supplied to the extruder device.

In a preferred embodiment of the present disclosure, the process for preparing a polyolefin composition further comprises additionally supplying polyolefin pellets to the extruder device. This option gives the possibility to further add already pelletized polymer material to the polyolefin composition. These pelletized polymer material are preferably added in smaller amounts. Examples of pelletized polymer material, which can advantageously be added to polyolefin composition, are previously produced polyolefin compositions, which do not comply with specified property requirements, or transition materials, which were obtained in a polymerization while transitioning from one polyolefin grade to another. The polyolefin pellets are preferably supplied to the same hopper as the mixture of polyolefin powder, carbon black and the optionally supplied one or more additives. The flow rate of the polyolefin pellets to the hopper is preferably also adjusted based on the measured flow rate of the polyolefin pellets. The computing device then continuously calculates a set point for the desired flows of polyolefin pellets to the hopper.

The powder mixture of polyolefin powder, carbon black and the optionally supplied one or more additives obtained in the mixing device is transferred from the mixing device into the extruder device. The extruder device is preferably equipped with at least one hopper for receiving this powder mixture. The material is then transferred from the hopper into the extruder device. The extruder device can however also be equipped with one or more additional hoppers for feeding additional materials to the extruder device. The extruder device serves for melting the polyolefin powder and so forming a polyolefin composition in liquid state, homogenizing the liquid polyolefin composition and uniformly distributing the carbon black and the optional one or more additives therein. This occurs preferably by applying heat and mechanical energy to the mixture of polyolefin powder, carbon black and additives. The liquid polyolefin composition is thereafter passed to a pelletizing unit and there transformed into pellets.

Suitable extruder device for the process of the present disclosure are extruders or continuous mixers. These extruders or mixers can be single- or two-stage machines which melt and homogenize the polyethylene composition. Examples of extruders are pin-type extruders, planetary extruders or corotating disk processors. Other possibilities are combinations of mixers with discharge screws and/or gear pumps. Preferred extruders are screw extruders and in particular extruders constructed as twin-screw machine. Particular preference is given to twin-screw extruders and continuous mixers with discharge elements and especially to continuous mixers with counter rotating and intermeshing double screw or the extruder device comprises at least one corotating double screw extruder. Machinery of this type is conventional in the plastics industry and is manufactured by, for example, Coperion GmbH, Stuttgart, Germany; KraussMaffei Berstorff GmbH, Hannover, Germany; The Japan Steel Works LTD., Tokyo, Japan; Farrel Corporation, Ansonia, USA; or Kobe Steel, Ltd., Kobe, Japan. Suitable extruder devices are further usually equipped with units for pelletizing the melt, such as underwater pelletizers.

Figure 1 shows schematically a comparative set-up for preparing a polyolefin composition.

Polyolefin powder is provided via line (1) to a polyolefin powder storage vessel (2). To maintain flowability of the polyolefin powder in the storage vessel (2), nitrogen is introduced into storage vessel (2) from the bottom via line (3). The polyolefin powder is supplied via line (4) to rotary valve (5) which is operated by a motor M. The polyolefin powder is then further transferred by gravity via line (6) to mixing device (25). Mixing device (25) is preferably a paddle mixer comprising two horizontally orientated counter-rotating shafts. On the way from rotary valve (5) to mixing device (25), the polyolefin powder passes a solid flow meter (9) which measures the flow rate of the polyolefin powder to mixing device (25), that means measures the amount of polyolefin powder delivered to mixing device (25) per time unit. Solid flow meter (9) is equipped with a controller (10). Controller (10) on the one hand sends a signal (11) to motor M of rotary valve (5) for adjusting the flow rate of the polyolefin powder if the flow rate measured by solid flow meter (9) differs from the targeted set point of the flow rate previously implemented in controller (10). On the other hand, controller (10) also send a signal (12), which is indicative of the flow rate of polyolefin powder from storage vessel (2) to mixing device (25), to a computing unit (13).

Carbon black is provided via line (31) to a carbon black storage vessel (32). To maintain flowability of the carbon black in the carbon black storage vessel (32), nitrogen is introduced into carbon black storage vessel (32) from the bottom via line (33). The carbon black is supplied via line (34) to pinch valve (35). The carbon black is then further transferred by gravity via line (36) to conveying chute (37). For transporting the carbon black within the conveying chute (37), nitrogen is introduced into conveying chute (37) via line (38). The carbon black is then transferred via line (39) to carbon black feeding vessel (40), which is equipped with agitator (41). For determining differences with respect to the carbon clack filling level, the carbon black feeding vessel (40) is situated on scale (42) for weight measuring. From carbon black feeding vessel (40), the carbon black is supplied via line (43) to pinch valve (44) and then further transferred by gravity via line (45) to dosing device hopper (46) of dosing device (47). Dosing device hopper (46) is operated by a motor M and equipped with agitator (48).

Dosing device (46) is capable of weighing the amount of carbon black dosed into line (49) through which the carbon black is supplied to mixing device (25). Dosing device (46) is equipped with a controller (50). Controllers (50) receive a signal which is indicative of the amount of carbon black dosed by dosing device (47) into line (49). The set point for the amount of carbon black to be dosed is continuously calculated by computing unit (13) based on signal (12), which is indicative of the flow rate of polyolefin powder from storage vessel (2) to mixing device (25), and based on a recipe for the polyolefin composition which recipe was previously implemented in computing unit (13).

Figure 1 further shows a dosing device (15) for feeding additives in particulate form to mixing device (25). It is however also possible to operate the process of the present disclosure with two or three or more of these additive feeding units. In each unit, an additive or an additive mixture is provided via a line (14) to a dosing device (15) being operated by a motor M. Dosing devices (15) are capable of weighing the amount of the additive or additive mixture dosed into lines (16) through which the additives are supplied to hopper (7). Each dosing device (15) is equipped with a controller (17). Controllers (17) receive signals which are indicative of the amounts of additive dosed by respective dosing devices (15) into respective lines (16). The set points for the amounts of additives to be dosed are continuously calculated by computing unit (13) based on signal (12), which is indicative of the flow rate of polyolefin powder from storage vessel (2) to mixing device (25), and based on a recipe for the polyolefin composition which recipe was previously implemented in computing unit (13).

The mixture of polyolefin powder, carbon black and additives prepared in mixing device (25) is transferred from mixing device (25) by gravity via line (26) to hopper (7) of extruder device (8) which is also operated by a motor M. By varying the speed of motor M of rotary valve (5), the flow rate of the polyolefin powder supplied to mixing device (25) can be adjusted. The combination of polyolefin powder, carbon black and additives is then transferred into the extruder device (8) and therein molten and homogenized. The melt is conveyed within extruder device (8) to pelletizing unit (18) from which the pelletized polyolefin composition is withdrawn via line (19).

The set-up shown in Figure 1 further includes a unit for supplying polymer pellets to hopper (7). This unit has a pellet storage vessel (20), to which polymer pellets are provided via line (21). The polyolefin pellets are supplied via line (22) to rotary valve (23) which is operated by a motor M. The polyolefin pellets are then further transferred via line (24) to hopper (7) of extruder device (8). The amount of polyolefin pellets supplied to hopper (7) is given by the speed of motor M of rotary valve (23), which speed is set by computing unit (13) based on signal (12), which is indicative of the flow rate of polyolefin powder from storage vessel (2) to hopper (7), and based on the recipe for the polyolefin composition which was previously implemented in computing unit (13).

By feeding the polyolefin as powder, that means in form of small particles, to a mixing device and contacting the polyolefin powder already there with the carbon black and optionally supplied additives, already a combination of polyolefin, carbon black and additives can be transferred into the extruder device and by that allows to prepare a very uniform distribution of carbon black and additives throughout all produced polymer pellets. A very homogeneous distribution can even be achieved when the individual particles of the polyolefin powder employed for preparing the polyolefin compositions vary strongly in their composition. The present disclosure provides a reliable process to benefit from the economical use of carbon black in form of free carbon black instead of a carbon black masterbatch and ensures the needed dosing accuracy for preparing high demanding applications like polyethylene pressure pipe in which the content of carbon black in the polyethylene composition has to be exactly in the range from 2.1 wt.% to 2.5 wt.%.

## Claims

1. A process for continuously preparing a polyolefin composition comprising polyolefin and carbon black in an extruder device (8) preparing polyolefin pellets of the polyolefin composition, the process comprising the steps
(i) supplying polyolefin in form of a polyolefin powder at a flow rate to a mixing device (25);
(ii) measuring a flow rate of the polyolefin pellets prepared in the extruder device (8);
(iii) supplying carbon black to the mixing device (25);
(iv) optionally supplying one or more further additives to the mixing device (25);
(v) adjusting the flow rate of the polyolefin powder to the mixing device (25) in response to the measured flow rate of the polyolefin pellets and either keeping the flow rates of the carbon black and the optionally supplied one or more further additives supplied to the mixing device (25) constant or also adjusting the flow rates of the carbon black and the optionally supplied one or more further additives supplied to the mixing device (25) in response to the measured flow rate of the polyolefin pellets;
(vi) mixing the polyolefin powder, the carbon black and the optionally supplied one or more further additives in the mixing device (25) to form a powder mixture,
(vii) transferring the powder mixture obtained in step (vi) from the mixing device (25) into the extruder device (8);
(viii) heating the powder mixture to form a melt and homogenizing the melt within the extruder device (8) to form a molten polyolefin composition; and
(ix) pelletizing the molten polyolefin composition, thereby yielding the polyolefin pellets.

2. The process of a claim 1, wherein the flow rate of the polyolefin pellets is measured by a solids flow meter (9).

3. The process of claim 1 or 2, wherein the mixing device (25) is a paddle mixer comprising two horizontally orientated counter-rotating shafts.

4. The process of any of claims 1 to 3, wherein the carbon black is supplied to the mixing device (25) from a carbon black storage vessel (32) in an at least three step process comprising
(iiia) transferring the carbon black from the storage vessel (32) through a first carbon black discharge valve (35) to a carbon black feeding vessel (40);
(iiib) subsequently transferring the carbon black from the carbon black feeding vessel (40) through a second carbon black discharge valve (44) by gravity to a dosing device (47); and
(iiic) subsequently transferring the carbon black from the dosing device (47) to the mixing device (25).

5. The process of claim 4, wherein the first carbon black discharge valve (35) and the second carbon black discharge valve (44) are pinch valves.

6. The process of claim 4 or 5, wherein the carbon black feeding vessel (40) is equipped with an agitator (41).

7. The process of any of claims 4 to 6, wherein the dosing device (47) is equipped with a dosing device hopper (46) and the dosing device hopper (46) is equipped with an agitator (48).

8. The process of any of claims 4 to 7, wherein, in transferring step (iiia), the carbon black passes a conveying chute (37) after having passed the first carbon black discharge valve (35).

9. The process of any of claims 4 to 8, wherein transferring step (iiia) is carried out intermittently, the carbon black feeding vessel (40) is situated on a scale and transferring step (iiib) is controlled by measuring differences in the weight of the carbon black feeding vessel (40).

10. The process of any of claims 1 to 9, wherein the polyolefin is a polyethylene.

11. The process of any of claims 1 to 10, wherein the polyolefin powder is a powder of a bimodal or multimodal polyolefin.

12. The process of claim 10, wherein the polyethylene is a high density polyethylene having a density determined according to ISO 1183 at 23°C from 0.945 to 965 g/cm³.

13. The process according to any of claims 1 to 12, additionally comprising
(x) supplying polyolefin pellets to the extruder device (8); and
(xi) adjusting the flow rate of the polymer pellets fed to extruder device (8) in response to the measured flow rate of the polyolefin pellets.

## Patentansprüche

1. Verfahren zur kontinuierlichen Herstellung einer Polyolefinzusammensetzung, die Polyolefin und Ruß umfasst, in einer Extrudervorrichtung (8), die Polyolefinpellets der Polyolefinzusammensetzung herstellt, wobei das Verfahren die Schritte umfasst:
(i) Zuführen von Polyolefin in Form eines Polyolefinpulvers mit einer Flussrate zu einer Mischvorrichtung (25);
(ii) Messen einer Flussrate der Polyolefinpellets, die in der Extrudervorrichtung (8) hergestellt werden;
(iii) Zuführen von Ruß zu der Mischvorrichtung (25);
(iv) gegebenenfalls Zuführen von einem oder mehreren weiteren Additiven zu der Mischvorrichtung (25);
(v) Anpassen der Flussrate des Polyolefinpulvers zu der Mischvorrichtung (25) in Reaktion auf die gemessene Flussrate der Polyolefinpellets, und entweder Halten der Flussraten des Rußes und des einen oder der mehreren zusätzlichen Additive konstant, die der Mischvorrichtung (25) zugeführt werden, oder auch Anpassen der Flussraten des Rußes und des einen oder der mehreren gegebenenfalls zugeführten weiteren Additive, die der Mischvorrichtung (25) zugeführt werden, in Reaktion auf die gemessene Flussrate der Polyolefinpellets;
(vi) Mischen des Polyolefinpulvers, des Rußes und des einen oder der mehreren gegebenenfalls zugeführten weiteren Additive in der Mischvorrichtung (25), um eine Pulvermischung zu bilden,
(vii) Überführen der in Schritt (vi) aus der Mischvorrichtung (25) erhaltenen Pulvermischung in die Extrudervorrichtung (8);
(viii) Erwärmen der Pulvermischung unter Bildung einer Schmelze und Homogenisieren der Schmelze innerhalb der Extrudervorrichtung (8), um eine geschmolzene Polyolefinzusammensetzung zu bilden; und
(ix) Pelletieren der geschmolzenen Polyolefinzusammensetzung, um hierbei die Polyolefinpellets zu erhalten.

2. Verfahren nach Anspruch 1, wobei die Flussrate der Polyolefinpellets durch ein Feststoffdurchflussmessgerät (9) gemessen wird.

3. Verfahren nach Anspruch 1 oder 2, wobei die Mischvorrichtung (25) ein Paddelmischer ist, der zwei horizontalausgerichtete, gegenläufig rotierende Wellen umfasst.

4. Verfahren nach einem der Ansprüche 1 bis 3, wobei der Ruß der Mischvorrichtung (25) aus einem Rußvorratsbehälter (32) in mindestens einem dreistufigen Verfahren zugeführt wird, welches umfasst:
(iiia) Überführen von Ruß aus dem Vorratsbehälter (32) durch ein erstes Rußaustragungsventil (35) zu einem Rußspeisebehälter (40);
(iiib) anschließendes Überführen des Rußes aus dem Rußspeisebehälter (40) durch ein zweites Rußaustragungsventil (44) mittels Schwerkraft zu einer Dosiervorrichtung (47) und
(iiic) anschließendes Überführen des Rußes aus der Dosiervorrichtung (47) in die Mischvorrichtung (25).

5. Verfahren nach Anspruch 4, wobei das erste Rußaustragungsventil (35) und das zweite Rußaustragungsventil (44) Quetschventile sind.

6. Verfahren nach Anspruch 4 oder 5, wobei der Rußspeisebehälter (40) mit einem Rührwerk (41) ausgestattet ist.

7. Verfahren nach einem der Ansprüche 4 bis 6, wobei die Dosiervorrichtung (47) mit einem Dosiervorrichtungsfülltrichter (46) ausgestattet ist und der Dosiervorrichtungsfülltrichter (46) mit einem Rührwerk (48) ausgestattet ist.

8. Verfahren nach einem der Ansprüche 4 bis 7, wobei der Ruß in Überführungsschritt (iiia) eine Förderrinne (37) durchläuft, nachdem er das erste Rußaustragungsventil (35) durchlaufen hat.

9. Verfahren nach einem der Ansprüche 4 bis 8, wobei Überführungsschritt (iiia) intermittierend durchgeführt wird, der Rußspeisebehälter (40) sich auf einer Waage befindet und der Überführungsschritt (iiib) gesteuert wird, indem Differenzen im Gewicht des Rußspeisebehälters (40) gemessen werden.

10. Verfahren nach einem der Ansprüche 1 bis 9, wobei das Polyolefin ein Polyethylen ist.

11. Verfahren nach einem der Ansprüche 1 bis 10, wobei das Polyolefinpulver ein Pulver eines bimodalen oder multimodalen Polyolefins ist.

12. Verfahren nach Anspruch 10, wobei das Polyethylen ein Polyethylen mit hoher Dichte mit einer gemäß ISO 1183 bei 23 °C bestimmten Dichte von 0,945 bis 965 g/cm³ ist.

13. Verfahren nach einem der Ansprüche 1 bis 12, das zusätzlich umfasst:
(x) Zuführen von Polyolefinpellets zu der Extrudervorrichtung (8); und
(xi) Anpassen der Flussrate der in die Extrudervorrichtung (8) eingespeisten Polymerpellets in Reaktion auf die gemessene Flussrate der Polyolefinpellets.

## Revendications

1. Procédé pour la préparation en continu d'une composition de polyoléfine comprenant une polyoléfine et du noir de carbone dans un dispositif d'extrusion (8) préparant des granules de polyoléfine de la composition de polyoléfine, le procédé comprenant les étapes suivantes
(i) l'alimentation d'une polyoléfine sous la forme d'une poudre de polyoléfine à un certain débit vers un dispositif de mélange (25) ;
(ii) la mesure d'un débit des granules de polyoléfine préparés dans le dispositif d'extrusion (8) ;
(iii) l'alimentation de noir de carbone au dispositif de mélange (25) ;
(iv)éventuellement l'alimentation d'un ou plusieurs additifs supplémentaires au dispositif de mélange (25) ;
(v) l'ajustement du débit de la poudre de polyoléfine au dispositif de mélange (25) en réponse au débit mesuré des granules de polyoléfine et soit le maintien des débits du noir de carbone et du ou des additifs supplémentaires éventuellement alimentés au dispositif de mélange (25) constants soit l'ajustement également des débits du noir de carbone et du ou des additifs supplémentaires éventuellement alimentés au dispositif de mélange (25) en réponse au débit mesuré des granules de polyoléfine ;
(vi)le mélange de la poudre de polyoléfine, du noir de carbone et du ou des additifs supplémentaires éventuellement alimentés au dispositif de mélange (25) pour former un mélange de poudres,
(vii) le transfert du mélange de poudres obtenu à l'étape (vi) depuis le dispositif de mélange (25) dans le dispositif d'extrusion (8) ;
(viii) le chauffage du mélange de poudres pour former un produit fondu et l'homogénéisation du produit fondu au sein du dispositif d'extrusion (8) pour former une composition de polyoléfine fondue ; et
(ix)la granulation de la composition de polyoléfine fondue, en donnant de ce fait les granules de polyoléfine.

2. Procédé selon la revendication 1, dans lequel le débit des granules de polyoléfine est mesuré par un débitmètre à matières solides (9).

3. Procédé selon la revendication 1 ou 2, dans lequel le dispositif de mélange (25) est un mélangeur à pales comprenant deux arbres contrarotatifs orientés horizontalement.

4. Procédé selon l'une quelconque des revendications 1 à 3, dans lequel le noir de carbone est alimenté au dispositif de mélange (25) à partir d'un récipient de stockage de noir de carbone (32) dans un procédé en au moins trois étapes comprenant
(iiia) le transfert du noir de carbone depuis le récipient de stockage (32) par le biais d'une première vanne de déchargement de noir de carbone (35) vers un récipient d'alimentation en noir de carbone (40) ;
(iiib) le transfert ultérieur du noir de carbone depuis le récipient d'alimentation en noir de carbone (40) par le biais d'une seconde vanne de déchargement de noir de carbone (44) par gravité vers un dispositif de dosage (47) ; et
(iiic) le transfert ultérieur du noir de carbone depuis le dispositif de dosage (47) vers le dispositif de mélange (25).

5. Procédé selon la revendication 4, dans lequel la première vanne de déchargement de noir de carbone (35) et la seconde vanne de déchargement de noir de carbone (44) sont des vannes à manchon.

6. Procédé selon la revendication 4 ou 5, dans lequel le récipient d'alimentation en noir de carbone (40) est équipé d'un agitateur (41).

7. Procédé selon l'une quelconque des revendications 4 à 6, dans lequel le dispositif de dosage (47) est équipé d'une trémie de dispositif de dosage (46) et la trémie de dispositif de dosage (46) est équipée d'un agitateur (48).

8. Procédé selon l'une quelconque des revendications 4 à 7, dans lequel, dans l'étape de transfert (iiia), le noir de carbone passe par une rigole de transport (37) après être passé par la première vanne de déchargement de noir de carbone (35).

9. Procédé selon l'une quelconque des revendications 4 à 8, dans lequel l'étape de transfert (iiia) est effectuée de façon intermittente, le récipient d'alimentation en noir de carbone (40) est situé sur une balance et l'étape de transfert (iiib) est commandée en mesurant les différences dans le poids du récipient d'alimentation en noir de carbone (40).

10. Procédé selon l'une quelconque des revendications 1 à 9, dans lequel la polyoléfine est un polyéthylène.

11. Procédé selon l'une quelconque des revendications 1 à 10, dans lequel la poudre de polyoléfine est une poudre d'une polyoléfine bimodale ou multimodale.

12. Procédé selon la revendication 10, dans lequel le polyéthylène est un polyéthylène haute densité ayant une masse volumique déterminée selon ISO 1183 à 23 °C allant de 0,945 à 965 g/cm³.

13. Procédé selon l'une quelconque des revendications 1 à 12, comprenant en outre
(x) l'alimentation des granules de polyoléfine au dispositif d'extrusion (8) ; et
(xi) l'ajustement du débit des granules de polymère introduits dans le dispositif d'extrusion (8) en réponse au débit mesuré des granules de polyoléfine.
